(19)

Europäisches
Patentamt
European
Patent Office
Office européen
des brevets

(11) **EP 2 441 815 A1**

(12) **EUROPEAN PATENT APPLICATION**

(43) Date of publication:
**18.04.2012 Bulletin 2012/16**

(51) Int Cl.:
*C09K 8/03* (2006.01)          *C09K 8/32* (2006.01)
*C09K 8/48* (2006.01)

(21) Application number: **10290551.0**

(22) Date of filing: **13.10.2010**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Imerys Oilfield Minerals, Inc.
Roswell, GA 30076 (US)**

(72) Inventor: **The designation of the inventor has not
yet been filed**

(74) Representative: **Rushton, David John
Haseltine Lake LLP
Redcliff Quay
120 Redcliff Street
Bristol BS1 6HU (GB)**

(54) **Ferrosilicon weighting agents for wellbore fluids**

(57)   A weighting agent for use in a wellbore fluid composition is provided. The weighting agent comprises a ferrosilicon material, wherein iron is present in the ferrosilicon material in an amount equal to or greater than about 50% by weight of the ferrosilicon material. A composition including a wellbore fluid and a weighting agent, as well as methods for using and making a weighting agent are also provided.

EP 2 441 815 A1

**Description**

**Field of the Disclosure**

The present disclosure relates to ferrosilicon weighting agents for use in wellbore fluids.

**Background**

In oil drilling applications, weighting agents may be used in oilfield drilling and cementing fluids to raise the fluid density. Liquid drilling fluid is often referred to as drilling mud. The three main types of drilling fluids are water-based muds (which can be dispersed and non-dispersed), non-aqueous muds, usually called oil-based muds, and gaseous drilling fluids. The drilling fluids function to provide hydrostatic pressure to prevent subterranean fluids (e.g., gas, water, and/or oil) from entering the wellbore, to prevent collapse of the wellbore, to keep the drill bit cool and clean during drilling, to carry out drill cuttings, and to suspend the drill cuttings while drilling is stopped- After drilling, a tubular steel casing is typically lowered into the wellbore, and a cementing fluid is pumped down the center of the casing and up into the annular space between the casing and the wellbore. The cementing fluid then sets into a strong, impermeable solid which holds the casing in place and seals the annular space, thus preventing passage of fluids along the wellbore on the outside of the casing.

The hydrostatic pressure provided by the drilling or cementing fluid, that is required to prevent invasion of subterranean fluids into the wellbore and/or to prevent the collapse of the wellbore, is dependent upon the fluid's density. It is usually advantageous to raise the density of the fluid above the level of the base liquid (e.g., water, brine or oil) from which it is made by adding a weighting agent. The weighting agents used in drilling or cementing fluids are generally inorganic particulate materials that are suspended in the fluids. In order to achieve high fluid densities of 1.5 $g/cm^3$ or more, particulate weighting agents may be added to the drilling fluids in significant quantities, which normally amount to more than 15% of the fluid by volume. However, the presence of a high volume fraction of solids may be detrimental to the performance of the drilling fluid, in particular its rheological profile. Thus, it would be advantageous to achieve a desired fluid density with a low volume fraction of suspended particles.

Previously, the use of weighting agents including particles less than 5 microns in size has been avoided by the industry because of the increased difficulty in keeping the particles dispersed in the wellbore fluid as compared with coarser particles. More recently, finer sub-micron sized particles have been introduced as weighting agents as methods for dispersing them have improved.

Barite (i.e., barium sulphate) is commonly used in drilling fluids as a weighting agent. Pure barite has a density of 4.4 $g/cm^3$, but most commercial grades have a density of 4.2 $g/cm^3$ since they contain a small amount of much lower density quartz and other impurities- Recently, the industry minimum specification (API standard) for barite density has had to be reduced to 4.1 $g/cm^3$ to increase the range of barite sources that may be used and to allow the demand for barite weighting agents to be met. Other materials such as haematite (with a density of 5.3 $g/cm^3$) and ilmenite (with a density of 4.8 $g/cm^3$) also may be used as weighting agents. In oil well cements, the use of denser materials such as haematite is more common, because the solids loading of the cement may be typically much higher than for a drilling fluid. However, since there is a higher solids loading, the volume of weighting agent that can be accommodated in the cementing fluid is more restricted.

Though iron has a much higher density (e.g., 7.9 $g/cm^3$) than barite, powdered iron is not used as a weighting agent in drilling or cementing fluids because conventional grinding methods are typically not used for grinding iron to a fine powder, as the iron is too hard and insufficiently brittle. Although powdered iron with a median particle size less of than 50 $\mu$m is available and is used in powder metallurgy, this powdered iron is produced by very expensive techniques such as chemical vapor deposition or the chemical reduction of preground iron oxide powders (see for example U.S. Patent 5,713,982), making it impractical for use as a weighting agent for drilling fluids, Powdered iron is also a potentially explosive, and thus hazardous, material.

Thus, it may be desirable to provide weighting agents that are inexpensive and abundant, and yet overcome the aforementioned disadvantages.

**Summary**

In the following description, certain aspects and embodiments will become evident. It should be understood that the aspects and embodiments, in their broadest sense, could be practiced without having one or more features of these aspects and embodiments.

One aspect of the disclosure relates to a composition for use in a wellbore including a wellbore fluid and a weighting agent. The weighting agent comprises a ferrosilicon material. In certain embodiments, iron is present in the ferrosilicon material in an amount equal to or greater than about 50% by weight of the ferrosilicon material.

Another aspect of the disclosure relates to a weighting agent including a ferrosilicon material having iron present in the ferrosilicon material in an amount equal to or greater than about 50% by weight of the ferrosilicon material. The weighting agent is for use in a wellbore fluid composition.

In still another aspect of the disclosure, a method for reducing the solids content of a wellbore fluid composition is provided. The method comprises providing a weighting agent including ferrosilicon material in a wellbore fluid. In certain embodiments, iron is present in the ferrosilicon material in an amount equal to or greater than about 50% by weight of the ferrosilicon material.

In yet another aspect of the disclosure, a method for making a weighting agent for use in a wellbore fluid composition is provided. The method comprises grinding a ferrosilicon material. In certain embodiments, iron is present in the ferrosilicon material in an amount equal to or greater than about 50% by weight of the ferrosilicon material.

In another aspect of the disclosure, a method for treating a wellbore is provided. The method comprises providing a wellbore fluid composition in the wellbore. The wellbore fluid composition includes a weighting agent comprising a ferrosilicon material, wherein iron is present in the ferrosilicon material in an amount equal to or greater than about 50% by weight of the ferrosilicon material.

It is to be understood that both the foregoing general description and the following detailed description are exemplary and explanatory only and are not restrictive of the invention, as claimed.

The accompanying drawings, which are incorporated in and constitute a part of this specification, illustrate exemplary embodiments of the invention and together with the description, may serve to explain some exemplary principles of the invention.

**Brief Description of the Drawings**

FIG. 1 is a graph of the particle size distribution of an embodiment of the weighting agent made in Example 1.

FIG. 2 is a graph of the particle size distribution of an embodiment of the weighting agent (Sample 2a) made in Example 2.

FIG. 3 is a graph of the particle size distribution of another embodiment of the weighting agent (Sample 2b) made in Example 2.

FIG. 4 is a graph of the particle size distribution of an embodiment of the weighting agent produced by combining Samples 2a and 2b to form Sample 2c made in Example 2.

**Description of Exemplary Embodiments**

Weighting Agents

According to some exemplary embodiments, high density ferrosilicon (FeSi) materials may be used in relatively small quantities as weighting agents in wellbore fluids of moderate density. Ferrosilicon is an alloy of iron and silicon. Ferrosilicon may have a variable composition, and in some embodiments the ferrosilicon material contains between 10% and 85% by weight iron and has a density ranging from about 2.4 $g/cm^3$ to about 7 $g/cm^3$. In one embodiment, the weighting agent is a ferrosilicon material including iron in an amount equal to or greater than about 50% by weight of the ferrosilicon material. In certain embodiments, the weighting agent is a ferrosilicon material including iron in an amount equal to or greater than about 55% by weight of the ferrosilicon material. In some embodiments, the ferrosilicon material may include iron in an amount equal to or greater than about 60% by weight of the ferrosilicon material. In another embodiment, the ferrosilicon material may include iron in an amount equal to or greater than about 65% by weight of the ferrosilicon material. In yet another embodiment, the ferrosilicon material may include iron in an amount equal to or greater than about 70% by weight of the ferrosilicon material. In still another embodiment, the ferrosilicon material may include iron in an amount equal to or greater than about 75% by weight of the ferrosilicon material. In certain embodiments, the weighting agent is a ferrosilicon material including iron in an amount equal to or greater than about 80% by weight of the ferrosilicon material. In other embodiments, the weighting agent is a ferrosilicon material including iron in an amount equal to or greater than about 85% by weight of the ferrosilicon material.

In certain embodiments, the ferrosilicon material has a density equal to or greater than about 5 $g/cm^3$. In one embodiment, the ferrosilicon material has a density equal to or greater than about 5.5 $g/cm^3$. In another embodiment, the ferrosilicon material has a density equal to or greater than about 6.0 $g/cm^3$. In yet another embodiment, the ferrosilicon material has a density equal to or greater than about 6.5 $g/cm^3$. In still another embodiment, the ferrosilicon material has a density equal to or greater than about 7.0 $g/cm^3$. In one embodiment, the ferrosilicon material has a density equal to or greater than about 7.5 $g/cm^3$. In other embodiments, the ferrosilicon material has a density equal to or greater than about 8.0 $g/cm^3$. In certain embodiments, the ferrosilicon material has a density ranging from about 6.7 $g/cm^3$ to about 7.0 $g/cm^3$. The higher the density of the weighting agent, the higher the achievable density of the wellbore fluid into which the weighting agent is added.

In certain embodiments, the ferrosilicon material includes silicon in an amount ranging from about 13% to about 18% by weight of the ferrosilicon material. It should be understood that in particular embodiments, the weighting agent and/or the ferrosilicon material may include additional components or impurities. For instance, the ferrosilicon material may include additional compounds such as alumina, silica, titanium, or combinations thereof. In some embodiments, the weighting agent may consist of or consist essentially of a ferrosilicon material such that the weighting agent has a higher density than a weighting agent comprising additional compounds or elements. Exemplary advantages resulting from the weighting agent having a higher density are discussed in further detail herein below.

According to particular embodiments, the ferrosilicon material comprises particles having a median particle size ($d_{50}$) less than about 100 $\mu$m, as measured by laser light scattering using a CILAS 1064 instrument. In certain embodiments, the ferrosilicon material comprises particles having a $d_{50}$ less than about 90 $\mu$m, as measured by laser light scattering using a CILAS 1064 instrument. In some embodiments, the ferrosilicon material comprises particles having a $d_{50}$ less than about 80 $\mu$m, as measured by laser light scattering using a CILAS 1064 instrument. In other embodiments, the ferrosilicon material comprises particles having a $d_{50}$ less than about 70 $\mu$m, as measured by laser light scattering using a CILAS 1064 instrument. In still other embodiments, the ferrosilicon material comprises particles having a $d_{50}$ less than about 60 $\mu$m, as measured by laser light scattering using a CILAS 1064 instrument. In another embodiment, the ferrosilicon material comprises particles having a $d_{50}$ less than about 50 $\mu$m, as measured by laser light scattering using a CILAS 1064 instrument. In yet another embodiment, the ferrosilicon material comprises particles having a $d_{50}$ less than about 40 $\mu$m, as measured by laser light scattering using a CILAS 1064 instrument. In one embodiment, the ferrosilicon material comprises particles having a $d_{50}$ less than about 30 $\mu$m, as measured by laser light scattering using a CILAS 1064 instrument. In another embodiment, the ferrosilicon material comprises particles having a $d_{50}$ less than about 20 $\mu$m, as measured by laser light scattering using a CILAS 1064 instrument. In other embodiments, the ferrosilicon material comprises particles having a $d_{50}$ less than about 10 $\mu$m, as measured by laser light scattering using a CILAS 1064 instrument. In another embodiment the ferrosilicon material comprises particles having a $d_{50}$ ranging from about 2 $\mu$m to about 100 $\mu$m, as measured by laser light scattering using a CILAS 1064 instrument. In yet another embodiment, embodiment the ferrosilicon material comprises particles having a $d_{50}$ greater than about 5 $\mu$m, as measured by laser light scattering using a CILAS 1064 instrument.

According to particular embodiments, the ferrosilicon material comprises $d_{90}$ less than about 200 $\mu$m, as measured by laser light scattering using a CILAS 1064 instrument. In other embodiments, the ferrosilicon material comprises particles having a $d_{90}$ less than about 100 $\mu$m, as measured by laser light scattering using a CILAS 1064 instrument. In another embodiment, the ferrosilicon material comprises particles having a $d_{90}$ ranging from about 30 $\mu$m to about 50 $\mu$m, as measured by laser light scattering using a CILAS 1064 instrument. In yet another embodiment, the ferrosilicon material comprises particles having a $d_{90}$ ranging from about 10 $\mu$m to about 30 $\mu$m, as measured by laser light scattering using a CILAS 1064 instrument.

According to particular embodiments, the ferrosilicon material comprises particles having a steepness equal to or greater than about 20, as measured by laser light scattering using a CILAS 1064 instrument. In other embodiments, the ferrosilicon material comprises particles having a steepness equal to or greater than about 30, as measured by laser light scattering using a CILAS 1064 instrument. In another embodiment the ferrosilicon material comprises particles having a steepness equal to or greater than about 40, as measured by laser light scattering using a CILAS 1064 instrument. Particle steepness (i.e., the steepness of the particle size distribution) is determined by the following formula:

$$\text{Steepness} = 100 \times (d_{30}/d_{70})$$

In one embodiment, the ferrosilicon material is a powder or particles produced by dry grinding in a mill, for example, a ball mill. For example, the ferrosilicon material may be ground in the presence of grinding media (e.g., alumina balls). In another embodiment, the ferrosilicon material is made by electrofusing scrap iron/steel and quartz, then "atomizing" (e-g., spray cooling the molten material) and/or grinding the ferrosilicon material. In one embodiment, the ferrosilicon material is made from iron and silica in a blast furnace using coke.

In certain embodiments, the ferrosilicon material is a by-product from the production of brown fused alumina (BFA)- For instance, the ferrosilicon material may be a by-product from production of brown fused alumina containing from about 78 wt. % to about 86 wt. % iron, from about 13 wt. % to about 18 wt. % silicon, from about 1 wt. % to about 5 wt.% titanium, and from about 0 wt. % to about 2 wt. % of additional impurities. In particular embodiments, a ferrosilicon by-product from a process for making brown fused alumina is crushed and then ground to produce a weighting agent. Thus, particular embodiments of the ferrosilicon material of the present invention may be derived at little or no cost from a process where the ferrosilicon material is a by-product or waste material.

<u>Wellbore Fluids</u>

In another aspect of the invention, wellbore fluids including weighting agents comprised of particular embodiments of the ferrosilicon materials described herein are provided. In certain embodiments, the wellbore fluid comprises a drilling fluid, a cementing fluid, or a kill fluid. As used herein, "kill fluid" or "kill mud" refers to a fluid used in a wellbore to prevent the flow of reservoir fluids by suppressing the pressure of the reservoir fluids (e.g., formation fluids such as oil or natural gas). In some embodiments, the drilling fluid comprises an oil-based drilling fluid or a water-based drilling fluid.

In particular embodiments, the wellbore fluid used may have a fluid density ranging from about 1.2 $g/cm^3$ to about 3 $g/cm^3$. For example, a drilling fluid may have a fluid density ranging from about 1.5 $g/cm^3$ to about 2.5 $g/cm^3$.

In certain embodiments, a composition comprising a wellbore fluid and a weighting agent has a fluid density equal to or greater than about 1.5 $g/cm^3$. In other embodiments, a composition comprising a wellbore fluid and a weighting agent has a fluid density equal to or greater than about 2-0 $g/cm^3$.

In particular embodiments, a composition is provided comprising a wellbore fluid and a weighting agent, wherein the composition has a solids content equal to or less than about 50% by volume of the composition. In another embodiment, the composition comprising a wellbore fluid and a weighting agent has a solids content equal to or less than about 35% by volume of the composition. In one embodiment, the composition comprising a wellbore fluid and a weighting agent has a solids content equal to or less than about 30% by volume of the composition. In other embodiments, the composition comprising a wellbore fluid and a weighting agent has a solids content equal to or less than about 25% by volume of the composition. In another embodiment, the composition comprising a wellbore fluid and a weighting agent has a solids content equal to or less than about 15% by volume of the composition. In yet another embodiment, the composition comprising a wellbore fluid and a weighting agent has a solids content equal to or less than about 10% by volume of the composition. In still another embodiment, the composition comprising a wellbore fluid and a weighting agent has a solids content equal to or less than about 5% by volume of the composition.

Thus, in certain embodiments, the composition comprising a wellbore fluid and a weighting agent has a fluid density equal to or greater than about 1.5 $glcm^3$ and a solids content equal to or less than about 25% by volume of the composition. In other embodiments, the composition comprising a wellbore fluid and a weighting agent has a fluid density equal to or greater than about 2.0 $g/cm^3$ and a solids content equal to or less than about 25% by volume of the composition.

In particular embodiments, the drilling fluids including a ferrosilicon material has a fluid density equal to or greater than about 1.5 $g/cm^3$ and a solids content equal to or less than about 30% by volume of the composition. In other embodiments, the cementing fluids including a ferrosilicon material has a fluid density equal to or greater than about 2.0 $g/cm^3$ and a solids content equal to or less than about 60% by volume of the composition. In still other embodiments, the kill fluids including a ferrosilicon material has a fluid density equal to or greater than about 2.0$g/cm^3$ and a solids content equal to or less than about 60% by volume of the composition.

<u>Methods for Using the Weighting Agents</u>

In another aspect of the present invention, a method for reducing the solids volume fraction in a composition for use in well drilling, construction, or control is provided. In particular embodiments, the method comprises providing a weighting agent comprising embodiments of the ferrosilicon material described herein in the wellbore composition.

In certain embodiments, the weighting agent may be provided in a wellbore fluid to provide a composition having a fluid density equal to or greater than about 1.5 $g/cm^3$. In other embodiments, the composition comprising a wellbore fluid and a weighting agent has a fluid density equal to or greater than about 2.0 $g/cm^3$.

In particular embodiments, the composition comprising a wellbore fluid and a weighting agent has a solids content equal to or less than about 25% by volume of the composition. In other embodiments, the composition comprising a wellbore fluid and a weighting agent has a solids content equal to or less than about 20% by volume of the composition. In another embodiment, the composition comprising a wellbore fluid and a weighting agent has a solids content equal to or less than about 15% by volume of the composition. In yet another embodiment, the composition comprising a wellbore fluid and a weighting agent has a solids content equal to or less than about 10% by volume of the composition. In still another embodiment, the composition comprising a wellbore fluid and a weighting agent has a solids content equal to or less than about 5% by volume of the composition.

Thus, in certain embodiments, the weighting agent may be provided in a wellbore fluid to provide a composition having a fluid density equal to or greater than about 1.5 $g/cm^3$ and a solids content equal to or less than about 25% by volume of the composition. In other embodiments, the composition comprising a wellbore fluid and a weighting agent has a fluid density equal to or greater than about 2.0 $g/cm^3$ and a solids content equal to or less than about 25% by volume of the composition. In still other embodiments, the composition comprising a wellbore fluid and a weighting agent has a fluid density equal to or greater than about 2.0 $g/cm^3$ and a solids content equal to or less than about 50% by volume of the composition.

In certain embodiments, the weighting agent would be used for very deep wells (e.g., high temperature high pressure (HTHP)), which are found in many places around the world (e.g., where there is deep sea drilling or underground drilling).

Without being bound by a particular theory, it is believed that the ferrosilicon material used as a weighting agent has a particle size, density, and loading (among other variables) that allows the weighting agent to be suspended in a wellbore fluid and assist in generating hydrostatic pressure as needed in well drilling applications (e.g., oil well drilling). In some embodiments, the weighting agents have a particle size that allows the formulation of a wellbore fluid with a viscosity low enough to allow it to be circulated easily through the wellbore while still being high enough to suspend the particles. The sedimentation of the particles should be kept to a minimum, as particles which settle on the bottom or sides of a wellbore no longer contribute to the hydrostatic pressure exerted by the fluid. Accordingly, embodiments of the weighting agent desirably would have a density and particle size distribution, among other characteristics, which would result in a composition having low sedimentation when the weighting agent is added to a wellbore fluid and the composition is circulated into a wellbore. For instance, the composition comprising the wellbore fluid and the weighting agent may be substantially homogeneous. The particle sedimentation rate can be reduced either by increasing the low-shear viscosity of the fluid (which may be detrimental to its performance), or by reducing the size of the particles.

In other embodiments, the weighting agents have a density such that the fluid density of the wellbore fluid containing the weighting agent is increased to a desired fluid density without detrimentally increasing the solids content of the wellbore fluid (i.e., the wellbore fluid will still function as desired). For example, a cementing fluid starting with a fluid density of about 2.0 $g/cm^3$ and a solids content of about 45% by volume of the composition may have its fluid density increased to about 2.5 $g/cm^3$ by substitution of part of the cement with a weighting agent comprising a ferrosilicon material such that the solids volume fraction the composition remains constant at 45%.

**Examples**

The laser light scattering measurement method used herein for making particle size measurements is a well known particle size analysis using a CILAS (Compagnie Industrielle des Lasers) 1064 instrument. The CILAS instrument determines the particle size distribution of a sample by passing a laser beam through a dilute suspension of sample particles and measuring the resultant diffraction pattern of the laser beam. The diffraction pattern is then analyzed using mathematical algorithms (Fraunhofer) based on optical theory to calculate the particle size distribution of the sample. The CILAS 1064 instrument was equipped with a wet sampling device and dual laser detection system to allow accurate measurement of very fine particles. The CILAS 1064 instrument normally provides particle size data to two decimal places.

Example 1

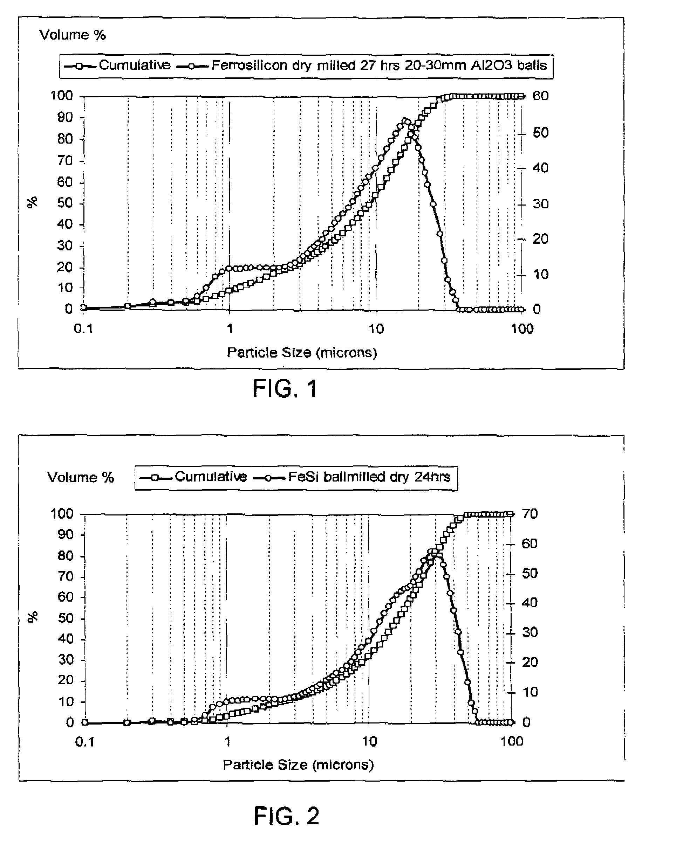

Ferrosilicon with an iron content of approximately 82% by weight and a density of 6.7 $g/cm^3$ was crushed in a jaw crusher to chips of maximum diameter of 6 mm. 1 kg of chips were placed in a cylindrical, 20 cm diameter sealed ceramic vessel which had been approximately half-filled with 15 mm to 25 mm diameter alumina ($Al_2O_3$) balls, and the cylinder was rotated steadily at a rotational speed of 120 rpm for 27 hrs to grind the chips to a powder. Upon separation from the balls, the powder was analyzed by laser light scattering and was shown to have a median particle size of 9 $\mu$m. The particle size distribution as measured by laser light scattering is shown in Table 1 below and in FIG. 1,

Example 2

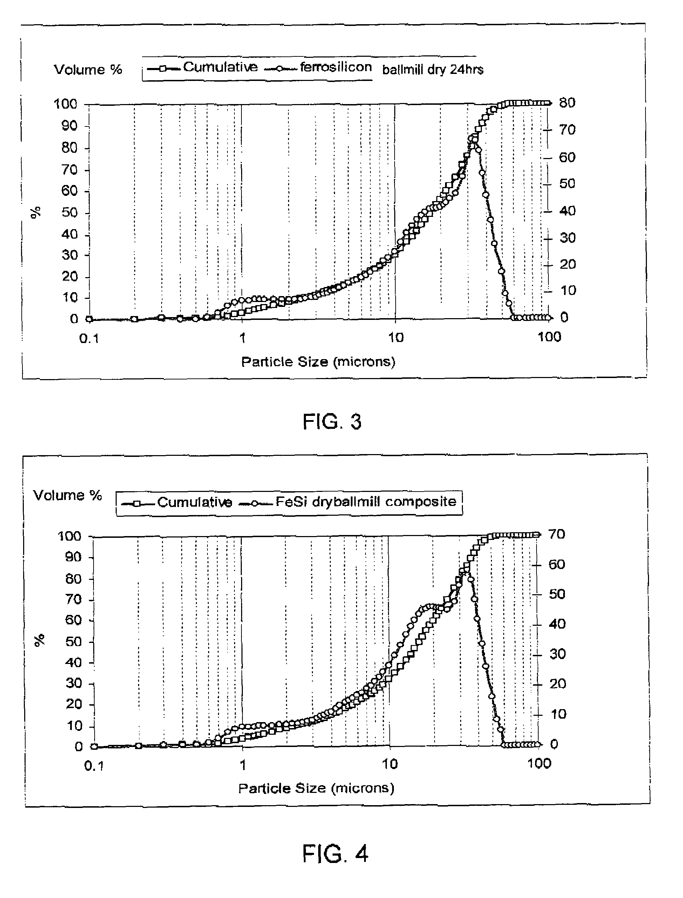

Two samples of crushed ferrosilicon (typical size 2 mm to 5mm) were placed in separate cylindrical, 20cm diameter sealed ceramic vessels, each of which had been approximately half-filled with 20 mm to 30 mm diameter alumina ($Al_2O_3$) balls, and the cylinders were rotated steadily at a rotational speed of 120 rpm for 24 hrs to grind the chips to a powder The powder was then separated from the balls and screened at 75 microns to get the distributions shown in FIGS. 2 and 3 (Samples 2a and 2b, respectively). The two samples were combined and remeasured for their particle size distributions, which is shown in FIG. 4 (Sample 2c). The particle size distributions as measured by laser light scattering are also shown in Table 1 below.

*Table 1. Particle Size Distribution and Steepness for Weighting Agent Made in the Examples*

|  | Example 1 ($\mu$m) | Sample 2a ($\mu$m) | Sample 2b ($\mu$m) | Sample 2c ($\mu$m) |
|---|---|---|---|---|
| d10 | 1.12 | 2.46 | 2.56 | 2.46 |
| d16 | 1.87 | 4.50 | 4.67 | 4.46 |
| d 25 | 3.62 | 7.66 | 8.06 | 7.58 |

(continued)

|  | Example 1 ($\mu$m) | Sample 2a ($\mu$m) | Sample 2b ($\mu$m) | Sample 2c ($\mu$m) |
|---|---|---|---|---|
| d 30 | 4.65 | 9.42 | 9.95 | 9.38 |
| d 50 | 9.05 | 16.39 | 17.41 | 16.32 |
| d 70 | 14.12 | 24.84 | 27.07 | 25.28 |
| d 75 | 15.54 | 27.14 | 29.49 | 28.03 |
| d 84 | 18.50 | 31.74 | 33.77 | 32.91 |
| d 90 | 21.14 | 35.66 | 31.32 | 36.69 |
|  |  |  |  |  |
| d30/d70 Steepness | 33 | 38 | 37 | 37 |

Example 3

One laboratory barrel of an oil-based drilling fluid of density 16 ppg (1.92 g cm$^{-3}$) was prepared using the milled ferrosilicon from Example 2, according to the formulation in Table 2 below:

**Table 2**

| Component | Mass / g |
|---|---|
| Clairsol 370 mineral oil* | 165.2 |
| Water | 45.9 |
| CaCl$_2$.2H$_2$O (brine) | 27.5 |
| Emul HT** (emulsifier) | 14.3 |
| Bentone 155*** (organo-clay rheology modifier) | 6.6 |
| Ca(OH)$_2$ (lime) | 8.2 |
| FeSi weighting agent | 408 |
| * Petrochem Carless<br>**M.I.Swaco<br>***Elementis Specialities | |

The drilling fluid was mixed thoroughly using a high-shear Silverson mixer and its rheology was measured at 80°C using a Fann 35 rheometer. Rheometer readings were recorded and are given in Table 3 below:

**Table 3**

| Fann rpm | Dial reading |
|---|---|
| 600 | 102 |
| 300 | 58 |
| 200 | 46 |
| 100 | 31 |
| 60 | 25 |
| 30 | 18 |
| 20 | 16 |
| 10 | 13 |
| 6 | 11 |
| 3 | 10 |

(continued)

| Fann rpm | Dial reading |
|---|---|
| Plastic Viscosity | 44.1 cP |
| Yield Point | 13.8 lb/100ft$^2$ |

The drilling fluid was left standing for several days, at the end of which no measurable sedimentation of the weighting agent had occurred. The solid volume fraction of weighting agent in this sample was 17.4 %. In comparison, the solid volume fraction of barite of density 4.2 g cm$^{-3}$ required to reach the same drilling fluid density in this system would be 30.5%, almost twice as much.

Other than in the examples, or where otherwise indicated, all numbers expressing quantities of ingredients, reaction conditions, and so forth used in the specification and claims are to be understood as being modified in all instances by the term "about." Accordingly, unless indicated to the contrary, the numerical parameters set forth in the specification and attached claims are approximations that may vary depending upon the desired properties sought to be obtained by the present disclosure. At the very least, and not as an attempt to limit the application of the doctrine of equivalents to the scope of the claims, each numerical parameter should be construed in light of the number of significant digits and ordinary rounding approaches.

Notwithstanding that the numerical ranges and parameters setting forth the broad scope of the invention are approximations and, unless otherwise indicated, the numerical values set forth in the specific examples are reported as precisely as possible. Any numerical value, however, inherently contains certain errors necessarily resulting from the standard deviation found in their respective testing measurements.

Other embodiments of the invention, including various combinations of the embodiments recited, will be apparent to those skilled in the art from consideration of the specification and practice of the exemplary embodiments disclosed herein. It is intended that the specification and examples be considered as exemplary only, with a true scope and spirit of the invention being indicated by the following claims.

**Claims**

1. A composition for use in a wellbore, the composition comprising:

   a wellbore fluid; and
   a weighting agent comprising a ferrosilicon material, wherein iron is present in the ferrosilicon material in an amount equal to or greater than about 50% by weight of the ferrosilicon material or equal to or greater than about 80% by weight of the ferrosilicon material.

2. The composition of claim 1, wherein the density of the ferrosilicon material is equal to or greater than about 5 g/cm$^3$.

3. The composition of claim 1 or 2, having a fluid density equal to or greater than about 1.5 g/cm$^3$ or equal to or greater than about 2.0 g/cm$^3$.

4. The composition of any of claims 1 to 3, having a solids content equal to or less than 50% by volume of the composition, equal to or less than about 30% by volume of the composition, or equal to or less than about 15% by volume of the composition.

5. The composition of any of claims 1 to 4, wherein the ferrosilicon material comprises particles having a $d_{50}$ ranging from about 2 $\mu$m to about 100 $\mu$m or equal to or less than about 10 $\mu$m.

6. The composition of any of claims 1 to 5, wherein the ferrosilicon material further comprises titanium in an amount ranging from about 1% to about 5% by weight of the ferrosilicon material.

7. A weighting agent comprising:

   a ferrosilicon material, wherein iron is present in the ferrosilicon material in an amount equal to or greater than about 50% by weight of the ferrosilicon material or equal to or greater than about 80% by weight of the ferrosilicon material, and wherein the weighting agent is for use in a wellbore fluid composition.

8. The weighting agent of claim 7, wherein the density of the ferrosilicon material is equal to or greater than about 5 g/cm$^3$.

9. The weighting agent of claim 7 or 8, wherein the ferrosilicon material comprises particles having a d$_{50}$ ranging from about 2 microns to about 100 microns or equal to or less than about 10 microns.

10. A method for reducing the solids content in a wellbore fluid composition, the method comprising:

   providing a weighting agent comprising a ferrosilicon material in a wellbore fluid, wherein iron is present in the ferrosilicon material in an amount equal to or greater than about 50% by weight of the ferrosilicon material or equal to or greater than about 80% by weight of the ferrosilicon material.

11. The method of claim 10, wherein the composition has a fluid density equal to or greater than about 1.5 g/cm$^3$ or equal to or greater than about 2.0 g/cm$^3$.

12. The method of claim 10 or 11, wherein the composition has a solids content equal to or less than 50% by volume of the composition, equal to or less than about 30% by volume of the composition, or equal to or less than about 15% by volume of the composition.

13. The method of any of claims 10 to 12, wherein the ferrosilicon material comprises particles having a d$_{50}$ ranging from about 2 microns to about 100 microns or equal to or less than about 10 microns.

14. A method for making a weighting agent comprising:

   grinding a ferrosilicon material, wherein iron is present in the ferrosilicon material in an amount equal to or greater than about 50% by weight of the ferrosilicon material or equal to or greater than about 80% by weight of the ferrosilicon material, and wherein the weighting agent is for use in a wellbore fluid composition.

15. Method for treating a wellbore comprising:

   providing a wellbore fluid composition in the wellbore, the wellbore fluid composition including a weighting agent comprising a ferrosilicon material, wherein iron is present in the ferrosilicon material in an amount equal to or greater than about 50% by weight of the ferrosilicon material or equal to or greater than about 80% by weight of the ferrosilicon material.

FIG. 1

FIG. 2

FIG. 3

FIG. 4

Europäisches
Patentamt

European
Patent Office

Office européen
des brevets

## EUROPEAN SEARCH REPORT

Application Number

EP 10 29 0551

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 22 22 657 B1 (KNAPSACK AG) 29 November 1973 (1973-11-29) * column 5, lines 8-10 * * examples 1-3 * * the whole document * | 1-15 | INV. C09K8/03 C09K8/32 C09K8/48 |
| X | DE 22 27 348 B1 (KNAPSACK AG) 29 November 1973 (1973-11-29) * the whole document * | 1-9,14, 15 | |
| X | Reade Advanced Materials: "Atomized / Spherical Ferro Silicon 15% Powder"[Online] 31 December 1997 (1997-12-31), XP002622866 Reade Products Retrieved from the Internet: URL:http://www.reade.com/Products/Ferro_Alloys/atomized-spherical-ferro-silicon-15%25-powder.html> [retrieved on 2011-02-16] * the whole document * -& Reade Advanced Materials: "Ferro Silicon (FeSi) Powder (atomited, spherical, milled, crushed & lump)"[Online] XP002622879 Reade Products Retrieved from the Internet: URL:http://www.reade.com/products/18-ferro-alloys-powder/188-fesi-ferro-silicon-15-powder-ferro-silicon-50-powder-ferro-silicon-75-powder-atomized-atomised-ferro-silicon-powder-spherical-milled-crushed-lump-cas-8049-17-0-> [retrieved on 2011-02-15] * the whole document * | 1-15 | TECHNICAL FIELDS SEARCHED (IPC) C09K |

-/--

The present search report has been drawn up for all claims

| Place of search | Date of completion of the search | Examiner |
|---|---|---|
| The Hague | 7 March 2011 | Straub, Thomas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................
& : member of the same patent family, corresponding
    document

EPO FORM 1503 03.82 (P04C01)

| | | | Europäisches<br>Patentamt<br>European<br>Patent Office<br>Office européen<br>des brevets | **EUROPEAN SEARCH REPORT** | **Application Number**<br>EP 10 29 0551 |

### DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| Y | GB 685 563 A (NAT LEAD CO)<br>7 January 1953 (1953-01-07)<br>* page 1, left-hand column, line 21 - page<br>1, right-hand column, line 60; claims 1,6<br>*<br>* the whole document * | 1-15 | |
| Y | US 2 393 047 A (KRASE HERBERT J)<br>15 January 1946 (1946-01-15)<br>* the whole document * | 1-15 | |
| Y | WO 2008/033838 A2 (MI LLC [US]; BALLARD<br>DAVID ANTONY [GB]; MASSAM JARROD [GB])<br>20 March 2008 (2008-03-20)<br>* paragraph [0026] *<br>* the whole document * | 1-15 | |
| Y | John Bensted: "Admixtures For Oilwell<br>Cements,"<br>In: Edited by: V.S. Ramachandran:<br>"Concrete Admixtures Handbook (2)<br>Properties, Science, and Technology"<br>31 December 1996 (1996-12-31), ,<br>XP008133310<br>ISBN: 978-0-8155-1373-5pages 1077-1111,<br>* page 1995; table 1, *<br>* page 1994 - page 1997 * | 1-15 | TECHNICAL FIELDS<br>SEARCHED (IPC) |

The present search report has been drawn up for all claims

| Place of search | Date of completion of the search | Examiner |
|---|---|---|
| The Hague | 7 March 2011 | Straub, Thomas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    ...........................................................................

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                    EP 10 29 0551

This annex lists the patent family members relating to the patent documents cited in the above-mentioned European search report.
The members are as contained in the European Patent Office EDP file on
The European Patent Office is in no way liable for these particulars which are merely given for the purpose of information.

07-03-2011

| Patent document cited in search report | | Publication date | Patent family member(s) | | Publication date |
|---|---|---|---|---|---|
| DE 2222657 | B1 | 29-11-1973 | AT | 328998 B | 26-04-1976 |
| | | | AU | 465960 B2 | 09-10-1975 |
| | | | AU | 5442273 A | 17-10-1974 |
| | | | BE | 801334 A1 | 26-12-1973 |
| | | | CA | 997924 A1 | 05-10-1976 |
| | | | CS | 199553 B2 | 31-07-1980 |
| | | | DD | 104210 A5 | 05-03-1974 |
| | | | DE | 2222657 A1 | 29-11-1973 |
| | | | ES | 413747 A1 | 16-01-1976 |
| | | | FI | 53191 B | 30-11-1977 |
| | | | FR | 2184029 A1 | 21-12-1973 |
| | | | GB | 1381853 A | 29-01-1975 |
| | | | IT | 988170 B | 10-04-1975 |
| | | | JP | 49048501 A | 10-05-1974 |
| | | | JP | 55043825 B | 08-11-1980 |
| | | | NO | 133124 B | 08-12-1975 |
| | | | PL | 87715 B1 | 31-07-1976 |
| | | | SE | 382394 B | 02-02-1976 |
| | | | US | 3943061 A | 09-03-1976 |
| | | | YU | 120873 A | 15-03-1980 |
| | | | ZA | 7302492 A | 27-02-1974 |
| DE 2227348 | B1 | 29-11-1973 | DE | 2227348 A1 | 29-11-1973 |
| | | | US | 3839014 A | 01-10-1974 |
| | | | ZA | 7303291 A | 24-04-1974 |
| GB 685563 | A | 07-01-1953 | NONE | | |
| US 2393047 | A | 15-01-1946 | NONE | | |
| WO 2008033838 | A2 | 20-03-2008 | AR | 062747 A1 | 03-12-2008 |
| | | | AR | 062751 A1 | 03-12-2008 |
| | | | AU | 2007294625 A1 | 20-03-2008 |
| | | | AU | 2007296539 A1 | 20-03-2008 |
| | | | CA | 2661918 A1 | 20-03-2008 |
| | | | CA | 2663192 A1 | 20-03-2008 |
| | | | CN | 101511968 A | 19-08-2009 |
| | | | CN | 101595197 A | 02-12-2009 |
| | | | EA | 200701191 A1 | 30-06-2008 |
| | | | EA | 200970272 A1 | 30-10-2009 |
| | | | EP | 1987112 A1 | 05-11-2008 |
| | | | EP | 2066759 A2 | 10-06-2009 |
| | | | GB | 2447393 A | 10-09-2008 |
| | | | US | 2010009874 A1 | 14-01-2010 |
| | | | US | 2008064613 A1 | 13-03-2008 |

EPO FORM P0459

For more details about this annex : see Official Journal of the European Patent Office, No. 12/82

**EP 2 441 815 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5713982 A